(19) **Europäisches Patentamt / European Patent Office / Office européen des brevets**

(11) **EP 1 047 234 B1**

(12) **FASCICULE DE BREVET EUROPEEN**

(45) Date de publication et mention
de la délivrance du brevet:
**23.12.2009 Bulletin 2009/52**

(51) Int Cl.:
**H04L 25/02** *(2006.01)* **H03H 17/06** *(2006.01)*

(21) Numéro de dépôt: **00401122.7**

(22) Date de dépôt: **21.04.2000**

(54) **Aadaptation de débit entre deux réseaux de transmission**

Ratenanpassung zwischen zwei Kommunikationssystemen

Rate adaptation between two communications systems

(84) Etats contractants désignés:
**DE ES GB IT**

(30) Priorité: **23.04.1999 FR 9905160**

(43) Date de publication de la demande:
**25.10.2000 Bulletin 2000/43**

(73) Titulaire: **SAGEM COMMUNICATIONS SAS**
**92848 Rueil Malmaison Cedex (FR)**

(72) Inventeur: **Frederic, Alain**
**95610 Eragny sur Oise (FR)**

(74) Mandataire: **Bloch, Gérard**
**Bloch & Bonnétat**
**23bis, rue de Turin**
**75008 Paris (FR)**

(56) Documents cités:
**EP-A- 0 665 546    EP-A- 0 719 064**
**EP-A- 0 748 136    EP-A- 0 836 339**
**WO-A-99/33233    US-A- 5 818 888**

**Description**

Le développement des réseaux numériques de transmission de voix et de données implique qu'ils soient compatibles pour que les utilisateurs de ces divers réseaux puissent communiquer entre eux indépendamment de leur réseau de rattachement.

Ainsi, les réseaux numériques de radiotéléphonie cellulaire ou encore les réseaux radio de téléphonie domotique sont chacun compatibles avec le réseau téléphonique commuté (RTC), et en particulier leurs débits numériques sont conformes à une même norme fixant une étroite plage de variation autour d'une valeur de consigne.

Cependant, si l'on tente d'établir une liaison entre deux réseaux à travers un équipement téléphonique d'abonné, les deux réseaux ne vont en général pas être strictement synchrones. De ce fait, le réseau à débit le plus bas ne fournira pas suffisamment de bits à l'autre réseau, ce qui produira un défaut perceptible en réception. En sens inverse, des bits seront perdus.

Une solution connue pour résoudre le problème ci-dessus d'asynchronisme des réseaux numériques consiste à les relier par des circuits analogiques. Un décodeur de sortie d'un des réseaux transforme les signaux numériques en signaux analogiques et les fournit à un codeur en entrée de l'autre réseau, qui renumérise les signaux. Une telle solution est très lourde et dégrade la qualité des signaux.

La présente invention vise à proposer une solution meilleure.

EP-A-0 748 136 enseigne un procédé pour relier deux réseaux de transmission, à deux rythmes d'échantillonnage différents, de données numériques de phonie et transmettre les données de phonie d'un réseau de sortie à l'autre réseau d'entrée.

US-A-5 818 888 enseigne d'utiliser l'interpolation linéaire dans un procédé analogue.

La demanderesse a cherché à encore améliorer la précision d'adaptation de débits dans le cas de deux réseaux plésiochrones, c'est-à-dire de fréquences peu différentes.

Ainsi, l'invention concerne tout d'abord un procédé de liaison de transmission à deux rythmes d'échantillonnage différents, de données numériques selon la revendication 1.

Les signaux de phonie conservent ainsi, tout au long de leur transmission, une forme numérique et restent donc insensibles aux parasites. En outre, les traitements numériques qu'ils subissent peuvent être effectués dans des circuits de calcul communs à d'autres fonctions, circuits qu'il n'y a donc pas besoin d'ajouter pour réaliser les traitements ci-dessus.

L'invention concerne aussi un combiné de radiotéléphonie DECT pour relier un réseau de téléphonie cellulaire à un réseau local de téléphonie selon la revendication 3.

L'invention sera mieux comprise à l'aide de la description suivante d'un mode de mise en oeuvre du procédé de l'invention, en référence au dessin annexé, sur lequel :

- la figure 1 représente schématiquement un réseau téléphonique, local et radio dans cet exemple, relié à un autre réseau téléphonique, ici de radiotéléphonie cellulaire et mettant en oeuvre le procédé de l'invention,
- la figure 2 est un schéma par blocs d'un dispositif électronique d'un combiné téléphonique du réseau radio local, pour la mise en oeuvre du procédé de l'invention, et
- la figure 3 illustre l'interpolation d'échantillons de signaux de phonie dans le combiné.

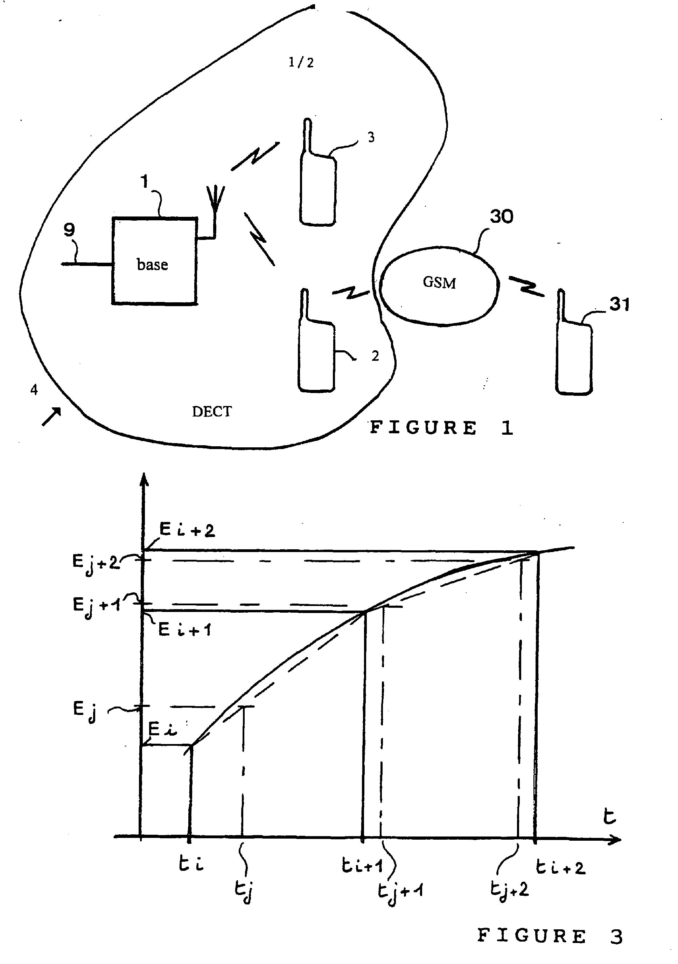

Sur la figure 1, le réseau téléphonique local 4 est un réseau radio au standard DECT, comportant une base 1 reliée par radio à une pluralité de combinés portables 2, 3. Une ligne 9 relie la base 1 au réseau téléphonique commuté. Le combiné 2 est en outre relié par radio à un réseau de téléphonie cellulaire 30, ici le réseau GSM, dont un combiné distant 31 est représenté. La base 1 peut, à travers le combiné 2, qui peut exister en plusieurs exemplaires, établir (ou recevoir) une communication téléphonique avec le terminal GSM 31 par traversée des voies radio du réseau local 4 et du réseau GSM 30. Cette communication peut concerner la parole ou tous autres signaux phoniques, tels que des signaux de modulation d'un modem.

On rappellera que le standard DECT prévoit une trame de 24 voies temporelles pour des transmissions numériques. Les signaux phoniques des microphones des combinés 2, 3 sont numérisés dans ceux-ci, à une fréquence nominale d'échantillonnage de 8 kHz fournie par la base 1 et les échantillons, d'un octet chacun, sont stockés provisoirement et transmis par rafales lorsque la voie temporelle affectée au combiné 2, 3 correspond à l'instant courant.

Pour ce qui concerne le réseau GSM 30, les signaux analogiques des terminaux comme 31 et 2 sont de même échantillonnés dans ceux-ci à une fréquence nominale de 8 kHz sous la commande en fréquence du réseau GSM 30, pour être ensuite comprimés et émis par paquets dans celui-ci.

Dans l'un et l'autre des réseaux, local 4 et GSM 30, en réception terminale, des circuits à mémoire tampon stockent les rafales ou paquets d'octets reçus et alimentent en octets, à 8 kHz, un décodeur commandant un haut-parleur.

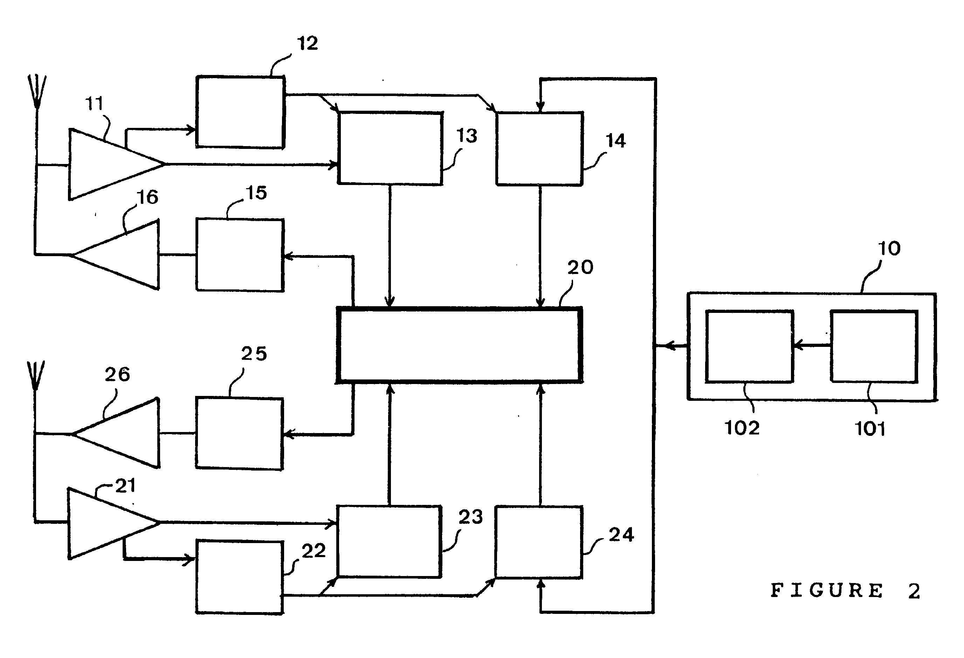

Dans le cas présent, le combiné 2 n'est pas en position terminale mais est un relais entre le réseau local 4 et le réseau GSM 30, qui ne sont pas synchronisés entre eux. Leurs fréquences d'échantillonnage ne sont pas strictement égales et glissent l'une par rapport à l'autre. De ce fait, un échantillon émis par un réseau 4, 30 vers l'autre 30, 4 risque parfois de ne disposer dans ce dernier d'aucun emplacement, physique ou temporel, de réception de l'échantillon, si le réseau récepteur est le plus lent. S'il est le plus rapide, ce sont deux échantillons qui sont parfois requis. La figure 2 représente les circuits du dispositif du combiné 2 bi-standard DECT-GSM qui permet de relier les deux réseaux, local 4 et cellulaire 30, sans perte ou redoublement d'échantillons.

Un circuit radio 11, récepteur de signaux phoniques, de parole ou autres, issus de la base 1 dans une voie temporelle DECT, asservit, à partir des signaux de bits reçus dans les voies temporelles, la phase d'un circuit oscillateur 12 qui commande la mémorisation des bits, issus du récepteur 11, dans un registre tampon 13. Dans le circuit radio 11, des circuits classiques, non représentés, comportent un compteur, à 24 états, de voies temporelles commandant une entrée parallèle d'un comparateur de sélection de voie temporelle recevant, sur son autre entrée, un numéro de voie temporelle affectée au terminal 2. Le comparateur fournit au circuit oscillateur 12 un signal qui en contrôle la sortie et précisément l'inhibe en dehors de la période de la voie temporelle considérée, pour ne valider la commande de mémorisation issue du circuit VCO 12 que pendant la durée de la voie temporelle réservée au combiné 2. Cette même commande produit aussi la mémorisation, dans un registre tampon horodateur 14, de l'état des sorties des circuits d'horloge 10, comportant un oscillateur 101 commandant des compteurs diviseurs de fréquence 102 fournissant une valeur représentant l'instant courant.

Les sorties des registres tampon 13 et 14 sont reliées à un bloc de calcul commun 20 qui commande un émetteur radio 16 du réseau DECT 4 à travers un registre tampon 15 commandé, de façon non représentée, par un signal d'horloge fourni par le circuit VCO 12. Les circuits 11, 13, 15 et 16 permettent l'échange d'échantillons ou mots de code entre le réseau local 4 et les autres circuits de la figure 2.

Côté réseau GSM 30, le combiné 2 comporte un ensemble de circuits homologues de l'ensemble de circuits 11-16, et qui portent chacun la même référence que leur circuit homologue mais avec la dizaine 2. On ne répètera donc pas la description ci-dessus. De même, les circuits GSM classiques de mise en paquets et de réception et d'extraction de données des paquets reçus, pour la transmission radio, sont bien connus et ne sont donc pas ici décrits. Les deux ensembles 11-16, 21-26 et le bloc de calcul commun 20 permettent un échange bi-directionnel de signaux numériques entre les deux réseaux 4, 30. Pour simplement une transmission mono-directionnelle, du réseau local DECT 4 vers le réseau GSM 30, le registre tampon 23 de mémorisation des échantillons de parole provenant du réseau GSM 30 serait inutile.

Le procédé de transmission des échantillons du réseau local DECT 4, de sortie, au réseau GSM 30, d'entrée, est le suivant.

Pour relier les deux réseaux de transmission 4, 30, à deux rythmes d'échantillonnage différents, de données numériques de phonie et transmettre les données de phonie du réseau de sortie DECT 4 à l'autre réseau d'entrée 30 (fig. 2),

- on saisit les valeurs Ei, Ei+1 et les instants ti, ti+1 des échantillons de phonie du réseau de sortie DECT 4, ceci dans respectivement les mémoires tampon 13 et 14,
- on saisit les instants tj, tj+1 des échantillons à transmettre sur le réseau d'entrée GSM 30, ces instants tj, tj+1 étant mémorisés dans la mémoire tampon horodatrice 24,
- pour chaque instant tj, tj+1 d'un échantillon à transmettre du réseau d'entrée GSM 30, on saisit, dans le bloc de calcul 20, les deux valeurs Ei, Ei+1 des deux échantillons du réseau de sortie DECT 4 de part et d'autre,
- on détermine la valeur Ej de l'échantillon à transmettre par interpolation des deux valeurs des échantillons de sortie Ei, Ei+1, et
- on transmet les échantillons Ej sur le réseau d'entrée GSM 30, à travers le registre tampon 25 et l'émetteur radio 26.

Comme le montre la figure 3, trois valeurs d'échantillons Ei, Ei + 1, Ei+ 2 qui sont saisies successivement correspondent à l'amplitude d'un signal de phonie, ici de parole, qui a été échantillonné à 8 kHz dans le combiné 3 et numérisé puis émis vers le combiné 2 à travers la base 1. Les instants d'arrivée de chaque bit de signal de parole dans ce dernier sont déterminés avec précision par les circuits d'horloge 10 dont l'oscillateur fonctionne à une dizaine de MHz, donc à plusieurs ordres de grandeur au-dessus de la fréquence d'échantillonnage de 8 kHz.

Dans cet exemple, les deux réseaux DECT 4 et GSM 30 fonctionnent chacun en partage de temps, comme indiqué, avec des trames dans lesquelles les combinés 2 et 3 ne disposent que d'un intervalle de temps pour transmettre les échantillons. De ce fait, si la vitesse moyenne de transmission des octets d'échantillons est bien de 8 kHz (à une compression près des signaux transmis), la vitesse instantanée est nettement plus élevée et sensiblement égale à la vitesse moyenne multipliée par l'inverse du facteur de forme (temps d'une voie temporelle/durée trame). Ce facteur de forme est de 24 dans le réseau DECT 4 et, du fait que chaque échantillon est codé sur 8 bits, la vitesse de transmission bit est de l'ordre de grandeur de 200 fois 8 kHz, donc environ 1,6 Mb/s.

On conçoit que, si l'on intégrait, avec les circuits radio 11, 16, 21 et 26, les circuits classiques d'adaptation de débit, pour transformer les paquets ou rafales à haut débit reçus en un flux continu d'octets à 8 kHz, soit 64 kb/s (et inversement en émission), les circuits d'horloge 10 pourraient être prévus à plus basse fréquence, par exemple 1 MHz.

Les circuits d'horloge 10 ont donc une fréquence bien supérieure à celle de la fréquence de transmission des bits et peuvent ainsi déterminer avec précision la phase relative entre les signaux des deux réseaux 4, 30, phase qui glisse en permanence. Comme chaque réseau 4, 30 asservit en fréquence et phase, en émission et réception, ses terminaux 2, 3 et 2, 31, la détection précise de la phase des échantillons Ej reçus du réseau GSM 30 (ou de tout autre signal comportant cette information de phase) dans le combiné 2 fournit la synchronisation de phase voulue pour l'émission, à l'instant voulu, d'échantillons sur le réseau GSM 30. Il peut d'ailleurs être prévu de synchroniser les circuits d'horloge 10 sur l'un des réseaux 4, 30, qui aura donc une phase relative fixe par rapport aux circuits d'horloge 10, et seul l'autre réseau aura une phase relative variable.

Le registre 13 et le registre horodateur 14 contiennent une suite d'échantillons Ei, Ei+1, Ei+2 et une suite correspondante de leurs instants, associés, de réception ti, ti+1, ti+2. Le registre horodateur 24 contient la suite des valeurs tj, tj+1, tj+2 des instants auxquels le réseau d'entrée GSM 30 doit recevoir des échantillons.

Le bloc de calcul 20 calcule par interpolation, pour l'instant tj, une valeur d'échantillon intermédiaire Ej à partir des deux valeurs d'échantillons Ei et Ei+1 d'instants ti et ti+1 qui sont temporellement situées de part et d'autre, selon la formule :

$$Ej = \frac{Ei\,(ti+1 - tj) + (Ei+1)\,(tj - ti)}{ti+1 - ti}$$

le dénominateur étant sensiblement fixe et valant une période du 8 kHz d'échantillonnage, soit 125 μs.

De même, pour l'instant tj + 1:

$$Ej+1 = \frac{(Ei+1)\,(ti+2 - tj+1) + (Ei+2)\,(tj+1 - ti+1)}{ti+2 - ti+1}$$

Et pour l'instant tj + 2 :

$$Ej+2 = \frac{(Ei+1)\,(ti+2 - tj+2) + (Ei+2)\,(tj+2 - ti+1)}{ti+2 - ti+1}$$

La figure 3 illustre le cas pour lequel le réseau GSM 30, et le réseau local 4 sont plésiochrones, c'est-à-dire de fréquences qui ne sont que peu différentes, par exemple de 1 % au maximum. Cette valeur a été volontairement exagérée sur la figure 3. Le réseau GSM 30 a ici une fréquence d'échantillonnage de 8030 Hz, supérieure, par exemple de 50 Hz, à celle du réseau DECT (7980 Hz), si bien qu'ici les deux instants tj + 1 et tj + 2 se trouvent encadrés par les deux mêmes instants ti + 1 et ti + 2. Grâce au procédé ci-dessus, cela n'induit aucun défaut quant à la fourniture du nombre exact d'échantillons nécessaires au réseau d'entrée GSM 30.

Les calculs ci-dessus, pour les instants tj et suivants, sont évidemment effectués après l'instant ti+1 1 qui suit l'instant tj. De ce fait, le bloc de calcul 20 doit parfois attendre, à partir de l'instant tj de l'échantillon intermédiaire Ej, pratiquement une période de 125 μs pour disposer de l'instant suivant dans l'autre suite (cf. tj + 1 qui précède ti + 2). La figure 3 montre en outre que, comme tj + 2 précède aussi ti + 2 dans le cas particulier représenté, on ne peut émettre l'échantillon intermédiaire Ej + 1 à l'instant tj+2 puisque cet échantillon Ej + 2 n'a pu encore être calculé. Compte tenu en outre du temps de calcul d'interpolation, le temps de traversée du combiné 2 est de deux périodes, soit 250 μs, c'est-à-dire que l'échantillon Ej est émis (26) à l'instant tj+2. Le bloc de calcul 20 se synchronise, pour déterminer la valeur des échantillons intermédiaires Ej à transmettre, sur les instants saisis tj de ceux-ci et fournit l'échantillon Ej au registre 25 entre l'instant tj + 1 et tj+2, cet échantillon Ej étant lu et émis par l'émetteur 26 à l'instant tj+2.

Afin d'améliorer le résultat d'interpolation, linéaire ci-dessus, il peut être prévu de tenir compte d'autres échantillons de sortie précédents Ei-1, Ei-2 pour calculer l'échantillon intermédiaire d'entrée Ej, c'est-à-dire d'effectuer un filtrage numérique pour prendre en compte la dérivée seconde de la fonction continue (signal phonique analogique d'origine) représentée par les valeurs discrètes Ei et ainsi déterminer une valeur d'interpolation plus représentative de ce signal, prenant en compte sa courbure.

**Revendications**

1. Procédé mis en oeuvre dans un combiné de radiotéléphonie DECT (2) pour relier un réseau de transmission numérique DECT (4) de sortie, à un réseau numérique de téléphonie cellulaire (30) d'entrée, lesdits réseaux étant à deux rythmes d'échantillonage différents de données numériques de phonie et pour transmettre les données de phonie dudit réseau de sortie (4) à l'autre réseau d'entrée (30), dans lequel

   - on saisit les valeurs (Ei, Ei + 1) et les instants (ti, ti + 1) des échantillons de phonie du réseau de sortie (4), dans des mémoires tampon (13,14) dudit combiné,
   - on saisit les instants (tj, tj+1) des échantillons à transmettre sur le réseau d'entrée (30), ces instants étant mémorisés dans une mémoire tampon horodatrice (24) dudit combiné,
   - pour chaque instant (tj, tj+1) d'un échantillon à transmettre du réseau d'entrée (30), on saisit dans un bloc de calcul (20) dudit combiné, les deux valeurs des deux échantillons (Ei, Ei +1) du réseau de sortie (4) de part et d'autre,
   - on détermine la valeur de l'échantillon à transmettre (Ej) par interpolation des deux valeurs des échantillons de sortie (Ei, Ei +1), la détermination de la valeur de l'échantillon à transmettre (Ej) étant synchronisée sur les instants saisis des échantillons de sortie (Ei, Ei +1), et
   - on transmet les échantillons (Ej) sur le réseau d'entrée (30), à travers un registre tampon (25) et un émetteur radio (26) du réseau d'entrée (30) dudit combiné.

2. Procédé selon la revendication 1, dans lequel on prend en compte pour l'interpolation plusieurs échantillons antérieurs (Ei-2, Ei-1) du réseau de sortie (4).

3. Combiné de radiotéléphonie DECT (2) pour relier un réseau de transmission numérique DECT (4) à un réseau numérique de téléphonie cellulaire (30), comprenant des moyens radio (21, 26), de liaison avec le réseau de téléphonie cellulaire (30) et des moyens (11, 16) de liaison avec une base (1) du réseau DECT (4) et un dispositif d'adaptation de débit entre les deux réseaux (4, 30) à deux rythmes d'échantillonnage différents transmettant des mots de code représentant des amplitudes de signaux analogiques, pour relier les moyens (21, 26, 11, 16) de liaison avec le réseau de téléphonie cellulaire et la base, comprenant

   - des moyens (11, 15-16, 21, 25-26) d'échange des mots de code avec les deux réseaux (4, 30), associés à des moyens (13, 23) de mémorisation des mots de code,
   - des moyens horodateurs (10, 12, 14, 22, 24) agencés pour saisir les instants de réception des mots de code et mémoriser (14 ; 24) deux suites de valeurs horodatrice (ti, ti+1, tj), la première suite (ti, ti+1) concernant les mots de code du premier réseau (4, 30) et la seconde suite (tj) concernant les mots de code du second réseau (30, 4) et
   - des moyens de calcul numérique (20) agencés pour lire les valeurs horodatrices (ti, ti+1, ti), pour déterminer la position temporelle relative de chaque valeur horodatrice (tj) de ladite seconde suite par rapport à deux autres valeurs horodatrices (ti, ti+1) de ladite première suite situées temporellement de part et d'autre de ladite valeur horodatrice (tj) de ladite seconde suite, pour, d'après ladite position, calculer un mot de code intermédiaire (Ej) correspondant à ladite valeur horodatrice (tj) de ladite seconde suite par interpolation des deux mots de code du premier réseau (4, 30) correspondant auxdites valeurs horodatrices (ti, ti+1) de ladite première suite et pour transmettre ledit mot de code intermédiaire (Ej) au second réseau (30, 4) à travers les moyens d'échange (25-26).

4. Combiné selon la revendication 3, dans lequel les moyens horodateurs (10, 12, 14, 22, 24) comportent un circuit (12, 22) de commande de mémorisation de l'état d'un circuit d'horloge (10).

5. Combiné selon la revendication 4, dans lequel le circuit (12, 22) de commande de mémorisation comporte un oscillateur asservi en phase par les moyens d'échange (11, 21).

6. Combiné selon la revendication 3, dans lequel les moyens de liaison avec la base (1) sont des moyens radio (11, 16).

**Claims**

1. A method implemented in a DECT radiotelephony handset (2) for connecting an output DECT digital transmitting network (4) to an input cellular telephony digital network (30), said networks being at two different sampling rates of digital full voice data and for transmitting the full voice data from said output network (4) to the other input network (30), wherein

- the values (Ei, Ei+1) and the time instants (ti, ti+1) of the full voice samples of the output network (4) are entered in buffer memories (13, 14) of said handset,
- the time instants (tj, tj+1) of the samples to be transmitted over the input network (30) are entered, these time instants being stored in a time stamping buffer memory (24) of said handset,
- for each time instant (tj, tj+1) of a sample to be transmitted from the input network (30), both values of both samples (Ei, Ei+1) of the output network (4) on either side are entered in a computing block (20) of said handset,
- the value of the sample to be transmitted (Ej) is determined by interpolating both values of the output samples (Ei, Ei+1), the determination of the value of the sample to be transmitted (Ej) being synchronised with the entered time instants of the output samples (Ei, Ei+1), and
- the samples (Ej) are transmitted over the input network (30), through a buffer register (25) and a radio transmitter (26) of the input network (30) of said handset.

2. The method according to claim 1, wherein several previous samples (Ei-2, Ei-1) of the output network (4) are taken into account for interpolation.

3. A DECT radiotelephony handset (2) for connecting a DECT digital transmitting network (4) to a cellular telephony digital network (30), including radio means (21, 26), for linking with the cellular telephony network (30) and means (11, 16) for linking with a base (1) of the DECT network (4) and a rate matching device between both networks (4, 30) to two different sampling rates transmitting codewords representing amplitudes of analogue signals, to connect the means (21, 26, 11, 16) for linking with the cellular telephony network and the base, including

- means (11, 15-16, 21, 25-26) for exchanging codewords with both networks (4, 30) associated with means (13, 23) for storing codewords,
- time stamping means (10, 12, 14, 22, 24) arranged to enter the receiving time instants of the codewords and store (14; 24) two series of time stamping values (ti, ti+1, tj), the first series (ti, ti+1) relating to the codewords of the first networks (4, 30) and the second series (tj) relating to the codewords of the second network (30, 4) and
- digital computing means (20) arranged to read the time stamping values (ti, ti+1, ti), to determine the relative time position of each time stamping value (tj) of said second series with respect to two other time stamping values (ti, ti+1) of said first series temporally located on either side of said time stamping value (tj) of said second series for, from said position, computing an intermediate codeword (Ej) corresponding to said time stamping value (tj) of said second series by interpolating both codewords of the first network (4, 30) corresponding to said time stamping values (ti, ti+1) of said first series and for transmitting said intermediate codeword (Ej) to the second network (30, 4) through the exchanging means (25-26).

4. The handset according to claim 3, wherein the time stamping means (10, 12, 14, 22, 24) include a circuit (12, 22) for controlling the status storing of a clock circuit (10).

5. The handset according to claim 4, wherein the storing control circuit (12, 22) includes an oscillator that is phase-locked by the exchanging means (11, 21).

6. The handset according to claim 3, wherein the means for linking with the base (1) are radio means (11, 16).

**Patentansprüche**

1. Verfahren, das in einem DECT-Funkfernsprechhandgerät (2) ausgeführt wird, um ein digitales DECT-Ausgangsübertragungsnetz (4) mit einem digitalen zellularen Eingangsfernsprechnetz (30) zu verbinden, wobei die Netze zwei verschiedene Takte zum Abtasten von digitalen Fernsprechdaten aufweisen, und um die Fernsprechdaten des Ausgangsnetzes (4) an das andere Eingangsnetz (30) zu übertragen, wobei

- die Werte (Ei, Ei+1) und die Zeitpunkte (ti, ti+1) der Fernsprechabtastungen des Ausgangsnetzes (4) in Zwischenspeicher (13, 14) des Handgeräts eingegeben werden,
- die Zeitpunkte (tj, tj+1) der auf dem Eingangsnetz (30) zu übertragenden Abtastungen eingegeben werden, wobei diese Zeitpunkte in einem Zeitstempel-Zwischenspeicher (24) des Handgeräts gespeichert werden,
- für jeden Zeitpunkt (tj, tj+1) einer von dem Eingangsnetz (30) zu übertragenden Abtastung in einem Rechenblock (20) des Handgeräts die beiden Werte der beiden Abtastungen (Ei, Ei+1) des Ausgangsnetzes (4) auf beiden Seiten eingegeben werden,
- der Wert der zu übertragenden Abtastung (Ej) durch Interpolation der beiden Werte der Ausgangsabtastungen (Ei, Ei+1) bestimmt wird, wobei die Bestimmung des Wertes der zu übertragenden Abtastung (Ej) mit den eingegebenen Zeitpunkten der Ausgangsabtastungen (Ei, Ei+1) synchronisiert wird, und
- die Abtastungen (Ej) auf dem Eingangsnetz (30) durch ein Zwischenregister (25) und einen Funksender (26) des Eingangsnetzes (30) des Handgeräts übertragen werden.

2. Verfahren nach Anspruch 1, wobei für die Interpolation mehrere vorhergehende Abtastungen (Ei-2, Ei-1) des Ausgangsnetzes (4) berücksichtigt werden.

3. DECT-Funkfernsprechhandgerät (2), um ein digitales DECT-Übertragungsnetz (4) mit einem digitalen zellularen Fernsprechnetz (30) zu verbinden, umfassend Funkmittel (21, 26) zur Verbindung mit dem zellularen Fernsprechnetz (30) und Mittel (11, 16) zur Verbindung mit einer Basis (1) des DECT-Netzes (4) und eine Vorrichtung zum Anpassen der Übertragungsrate zwischen den beiden Netzen (4, 30) mit zwei unterschiedlichen Abtasttakten, die Codewörter übertragen, die analoge Signalamplituden darstellen, um die Verbindungsmittel (21, 26, 11, 16) mit dem zellularen Fernsprechnetz und der Basis zu verbinden, umfassend

- Mittel (11, 15-16, 21, 25-26) zum Austauschen von Codewörtern mit den beiden Netzen (4, 30), die mit Mitteln (13, 23) zum Speichern der Codewörter verknüpft sind,
- Zeitstempelmittel (10, 12, 14, 22, 24), die angeordnet sind, um die Empfangszeitpunkte der Codewörter einzugeben und zwei Folgen von Zeitstempelwerten (ti, ti+1, tj) zu speichern (14; 24), wobei die erste Folge (ti, t+1) die Codewörter des ersten Netzes (4, 30) betrifft und die zweite Folge (tj) die Codewörter des zweiten Netzes (30, 4) betrifft, und
- digitale Rechenmittel (20), die angeordnet sind, um die Zeitstempelwerte (ti, ti+1, ti) zu lesen, um die relative Zeitposition jedes Zeitstempelwertes (tj) der zweiten Folge im Verhältnis zu den beiden anderen Zeitstempelwerten (ti, ti+1) der ersten Folge zu bestimmen, die sich zeitlich gesehen auf beiden Seiten des Zeitstempelwertes (tj) der zweiten Folge befinden, um aus dieser Position ein Zwischencodewort (Ej) zu berechnen, das dem Zeitstempelwert (tj) der zweiten Folge entspricht, durch Interpolation der beiden Codewörter des ersten Netzes (4, 30), die den Zeitstempelwerten (ti, ti+1) der ersten Folge entsprechen, und um das Zwischencodewort (Ej) dem zweiten Netz (30, 4) über die Austauschmittel (25-26) zu übertragen.

4. Handgerät nach Anspruch 3, wobei die Zeitstempelmittel (10, 12, 14, 22, 24) eine Schaltung (12, 22) zum Steuern des Speicherns des Zustands eines Taktgebers (10) umfassen.

5. Handgerät nach Anspruch 4, wobei die Schaltung (12, 22) zum Steuern des Speicherns einen Oszillator umfasst, der von den Austauschmitteln (11, 21) phasengesteuert wird.

6. Handgerät nach Anspruch 3, wobei die Mittel zur Verbindung mit der Basis (1) Funkmittel (11, 16) sind.

1 / 2

base

9

1

3

30

GSM

31

2

4

DECT

FIGURE 1

$E_{i+2}$

$E_{j+2}$

$E_{j+1}$

$E_{i+1}$

$E_j$

$E_i$

$t_i$

$t_j$

$t_{i+1}$

$t_{j+1}$

$t_{i+2}$

$t_{j+2}$

$t$

FIGURE 3

FIGURE 2

EP 1 047 234 B1

9

**RÉFÉRENCES CITÉES DANS LA DESCRIPTION**

**Documents brevets cités dans la description**

- EP 0748136 A
- US 5818888 A